# EUROPEAN PATENT APPLICATION

(11) **EP 1 755 150 A2**
(43) Date of publication of application: **21.02.2007**
(21) Application number: 06252578.7
(22) Date of filing: 17.05.2006
(51) Int. Cl.: H01J 61/92, H01J 65/04, H01J 61/52

(54) **Flat fluorescent lamp and backlight unit having the same**

(30) Priority: 18.05.2005 KR 20050041501
(71) Applicant: Samsung Corning Co., Ltd, Suwon-si, Gyeonggi-do 443-732 (KR)
(72) Inventor: Shin, Jin-Wook Korea Advanced Nano Fab Center 3F,, Gyeonggi-do 472-732 (KR); Park, Kyung-Hee, Chungcheongnam-do 330-754 (KR); Kang, Woo-Seok, Seoul 135-841 (KR)
(74) Representative: Pratt, David Martin

(57) **Abstract**

Provided is a flat fluorescent lamp comprising a main body with a plurality of discharge spaces therein, an electrode unit for applying voltage to the discharge spaces, said electrode unit formed on the surface of the main body, and at least one cooling pad adhered onto the electrode unit. The cooling pad may include at least two materials which have different thermal conductivity with each other. Heat dissipation through the cooling pad minimizes the heat accumulation in the electrode unit, and resultantly prevents a pinhole in a glass plate at the electrode unit. Furthermore, driving voltage to be applied to the lamp can be increased beyond its limitation, thereby realizing a high brightness flat fluorescent lamp.

## Description

### Technical Field

The present invention relates to a flat fluorescent lamp and a backlight unit, more particularly, to a flat fluorescent lamp including a cooling pad for dissipating heat generated from an electrode unit and a backlight unit having the same.

### Background Art

LCD (liquid crystal display) has been developed as an alternative display for CRT (cathode ray tube) because of its various advantages such as low driving voltage, less power consumption, and so on. Currently, TFT-LCD has been widely used in various technical fields, due to realization of high-definition, large size, and full color as compared with CRT.

LCD is a non-emissive display so that it needs a light source at the rear side thereof. Lamp or LED is used as the light source for LCD, and a backlight unit including such a light source is provided on LCD panels.

CCFL (cold cathode fluorescent lamp), a kind of linear light source, has been mainly used as a light source for LCD. It has a complicated structure of linear lamp array and shows relatively high power consumption. Under the circumstances, FFL (flat fluorescent lamp) has been developed as a surface light source.

Typically, FFL includes a discharge space for containing Hg and/or other discharge gases, an electrode unit disposed at the outer surface of the discharge space and for applying voltage to the discharge space. Voltage applied through the electrode unit generates ultraviolet ray from the discharge gas. The generated ultraviolet ray excites a fluorescent material in the discharge space to generate visible ray.

In general, a light source including an external electrode has a fatal defect that excessive voltage (or excessive current) applied may cause micro holes (i.e., pinhole) in a glass plate under the electrode so that the light source may be difficult to keep the discharge state stable.

The causes of the pinhole in a glass plate are the dielectric breakdown due to locally concentrated electric field under an electrode, the composition change by Hg migration into the glass plate, the increase of conductivity according to ion behavior at the surface of the glass plate, the sudden increase of electrode temperature during driving under high voltage, and so on.

To prevent the generation of pinhole, various solutions have been suggested as follows: high dielectric layer coating on the plate, increasing the thickness of the plate, protecting layer (such as Al₂O₃ or Y₂O₃) coating on the plate, and ion exchange (i.e., Na → Cs or K) in the surface of the plate. However, such solutions as above has an additional disadvantage of high production cost.

### Summary of Invention

It is an object of the present invention to provide a flat fluorescent lamp without pinhole and a backlight unit having the same.

It is another object of the present invention to increase driving voltage to be applied, thereby realizing a high brightness flat fluorescent lamp.

It is still another object of the present invention to provide a flat fluorescent lamp with high reliability and a backlight unit having the same.

In the efficient attainment these and other objects, the present invention provides a flat fluorescent lamp comprising: a main body with a plurality of discharge spaces therein; an electrode unit for applying voltage to the discharge spaces, said electrode unit formed on the surface of the main body; and at least one cooling pad adhered onto the electrode unit.

In an embodiment of the present invention, the electrode unit may be formed as a band shape. The cooling pad has an elongated shape extending from an end to the other end of the electrode unit to cover the upper surface of the electrode unit.

In another embodiment of the present invention, the electrode unit may include a plurality of electrodes formed independently. The cooling pad is formed to correspond to the electrodes respectively.

The cooling pad may include at least two materials which have different thermal conductivity with each other in order to increase its cooling efficiency.

The flat fluorescent lamp may further comprise a supporting member being combined therewith and preventing the cooling pad from being separated from the electrode unit.

The present invention also provides a backlight unit including the flat fluorescent lamp.

In accordance with the present invention, heat flux from the electrode unit of a flat fluorescent lamp can be weakened due to the cooling pad thereon, so as to prohibit or minimize the heat accumulation in the electrode unit. As a result, the electrode unit can be kept in a steady temperature and any pinhole in the glass plate of a flat fluorescent lamp is hardly generated. Furthermore, since the electrode unit is prevented from being excessively heated, driving voltage to be applied to the lamp can be increased beyond its limitation, thereby realizing a high brightness flat fluorescent lamp.

### Brief Description of the Drawings

The above objects and other advantages of the present invention will become more apparent by describing in detail the preferred embodiments thereof with reference to the accompanying drawings, in which:
Fig. 1 is a perspective view showing a flat fluorescent lamp in accordance with a preferrable embodiment of the present invention;
Fig. 2 is a cross-sectional view taken along a line X-X' shown in Fig. 1;
Fig. 3 is an enlarged view of A shown in Fig. 1;
Fig. 4 is a cross-sectional view of a cooling pad of the flat fluorescent lamp shown in Fig. 1;
Fig. 5 is a cross-sectional view of another cooling pad of the flat fluorescent lamp shown in Fig. 1;
Fig. 6 is a cross-sectional view of still another cooling pad of the flat fluorescent lamp shown in Fig. 1;
Fig. 7 is a exploded perspective view showing a supporting member in a flat fluorescent lamp in accordance with the present invention;
Fig. 8 is an exploded perspective view showing a backlight unit in accordance with the present invention.

### Best Mode for Carrying Out the Invention

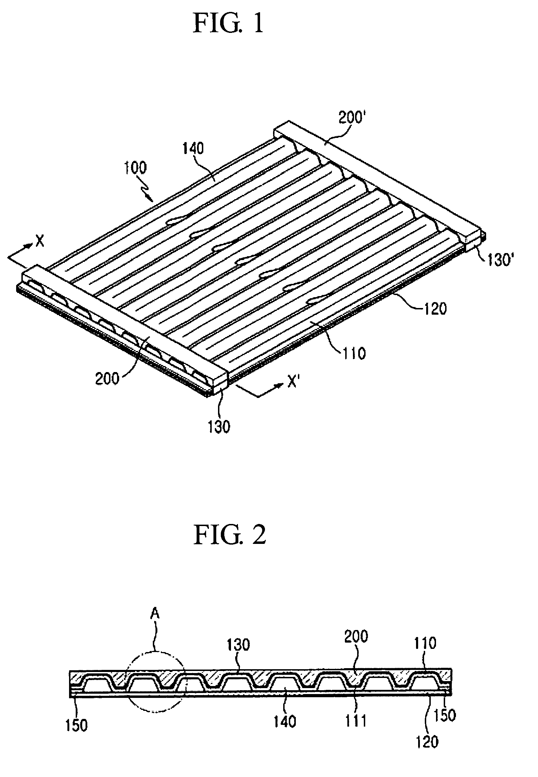

As shown in Figs. 1 and 2, according to a preferable embodiment of the present invention, a flat fluorescent lamp 100 includes at least one cooling pads 200, 200' for cooling electrode units 130, 130'. In operating, heat generated from the electrode units 130, 130' can be effectively emitted through the cooling pads 200, 200' adhered thereto.

The flat fluorescent lamp 100 includes a main body which comprises an upper plate 110 and a lower plate 120. A plurality of barrier parts 111 is formed integrally on the upper plate 110 and the lower plate 120 is formed to be flat.

The upper plate 110 and the lower plate 120 are combined with each other using a frit and thusly-combined plates form a discharge space therebetween including a plurality of channels. The pair of electrode units 130, 130' for applying driving voltage to the discharge space are disposed as a band shape at both the ends of the channel 140 to be across the width of the lamp, i.e., to be perpendicular to the direction of the channel length. The electrode units 130, 130' are formed with a uniform thickness and in a wavily curved shape along the surface of the channels and the barrier parts 111. In an alternative embodiment, the electrode units may be formed to include a plurality of independent electrodes, which correspond to the individual discharge space (i.e., the channel) respectively. In this embodiment, the cooling pad may be preferable to be formed as an island corresponding to the respective electrode.

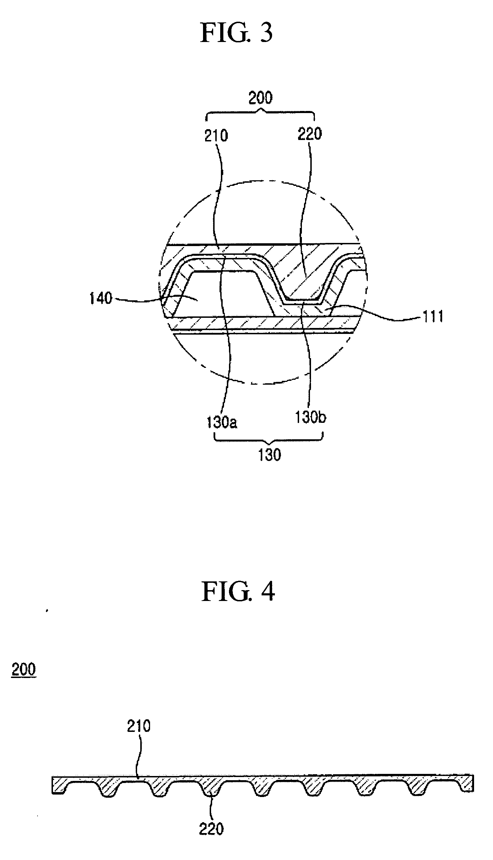

Referring to Figs. 3 to 6, the cooling pads 200, 200' include at least one upper part 210 and at least one protrusion part 220 formed on the lower surface of the upper part so that they can keep in complete contact with the wavily curved electrode units which are formed across the channels. The cooling pads cover entirely all the upper surface of the electrode units from an end and the other end thereof. The upper part 210 has a flat shape and is adhered onto the electrode part 130a on the channel 140. The protrusion part 220 is formed on the lower surface of the upper part 210 is adhered onto the barrier part 111 between the channels 140. Thus, the cooling pads 200, 200' including the upper part 210 and the protrusion part 220 keep in contact entirely with the wavily curved electrode units formed on the channel 140 and the barrier part 111.

Alternatively, the shape of the cooling pad according to the present invention may be variable depending on the structure of a flat fluorescent lamp. For example, when a main body is formed with a flat upper plate, a flat lower plate and independent barrier ribs disposed between the plates, a band-shaped flat cooling pad is preferable.

The cooling pad may be provided for one of the electrode units 130, 130', preferably for both the units.

The cooling pads 200, 200' may be made of a material with thermal conductivity under 40 W/mK, preferably of a silicone based one, to fluently dissipate heat from the electrode units and thereby keeping the temperature under 150 °C. Excessive temperature over 150 °C may cause to break the equilibrium between inlet and out let of heat flux in the electrode units, which thusly causes higher possibility of generating a pinhole in a glass plate of a flat fluorescent lamp.

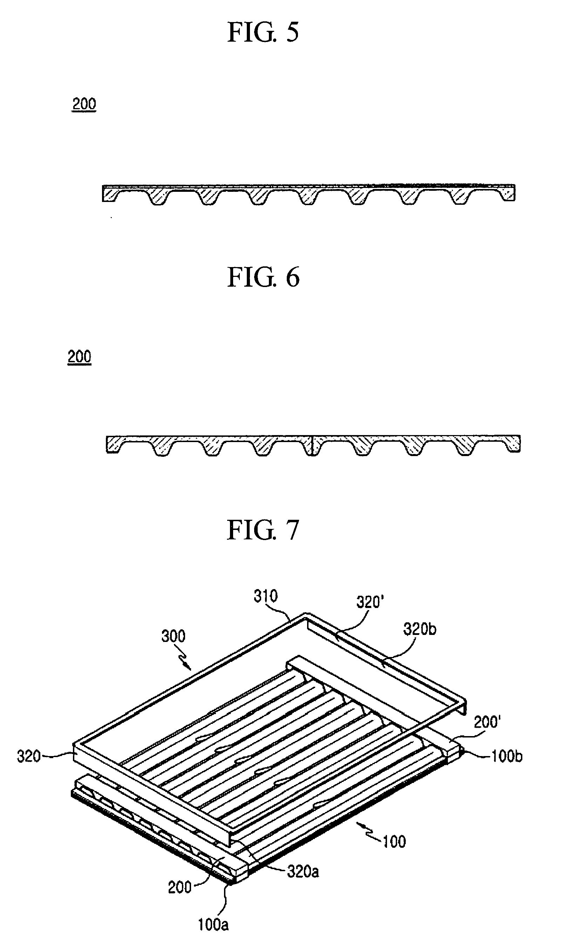

The cooling pads 200, 200' may be made of a single layer or body as shown in Fig. 4. Alternatively, the pads may be made of at least two materials with different thermal conductivity with each other in order to prevent excessive heat generation or local overheat from the electrode units. In an embodiment, as shown in Fig. 5, the cooling pad is formed with at least two layers stacked vertically with different thermal conductivity with each other to minimize any abnormal discharge caused by overheat in the electrode unit. In another embodiment, as shown in Fig. 6, the cooling pad includes at least two parts formed to be horizontally adjacent to each other. In this way, local excess of temperature in the electrode unit can be prevented by designing the structure of the cooling pad to dispose relatively high thermal conductive material at a part to be required for better heat dissipation.

The cooling pads 200, 200'may be adhered with a silicon-based binder to the surface of the electrode units 130, 130'. Alternatively or additionally, as shown in Fig. 7, a supporting member 300 may be used to strongly contact the cooling pads 200, 200' with the electrode units 130, 130'.

The supporting member 300 comprises an outer frame 310 and a pair of fixing parts 320, 320'. The outer frame 310 is formed in a rectangular shape to correspond to the outer edges the flat fluorescent lamp. The fixing parts 320, 320' has a folded end 320a, 320b which is at two ends facing each other of the outer frame and is fitted into two side parts facing each other of the flat fluorescent lamp. When mounted into the flat fluorescent lamp 100, the supporting member 300 presses the cooling pads 200, 200' to keep in close contact with the electrode units. The fixing parts 320, 320' may be fitted to the front and rear side 100a, 100b in the direction of the length of the lamp 100, or alternatively to the right and left side in the direction of the width of the lamp 100.

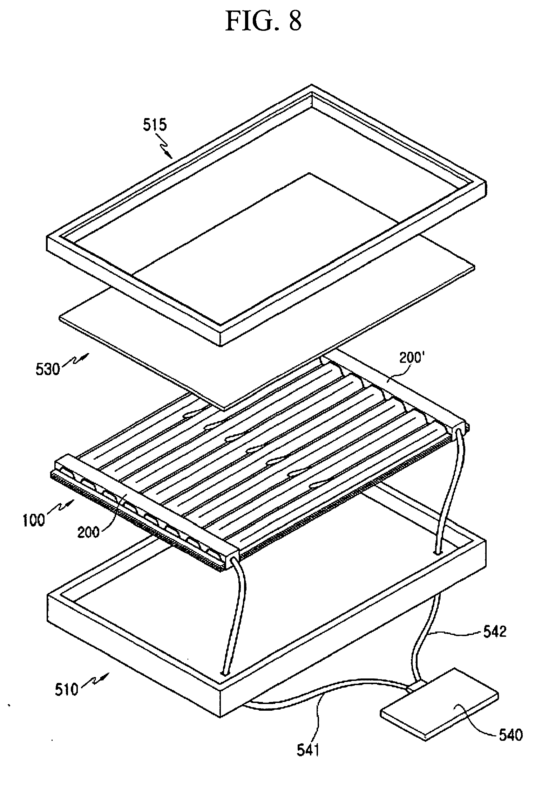

Fig. 8 shows a perspective view of a backlight unit with a flat fluorescent lamp including the cooling pads. Referring to Fig. 8, the backlight unit according to the present invention includes a flat fluorescent lamp 100, an upper and a lower cases 515, 510, an optical sheet 530, and an inverter 540.

The lower case 510 provides the flat fluorescent lamp with a space for mounting.

The upper case 515 coupling with the lower case 510 fixes and supports stably the flat fluorescent lamp 100 and the optical sheet 530 and is in a close contact with the surface of the cooling pad 200, 200' disposed on the flat fluorescent lamp 100. Heat generated from electrode units is emitted through the cooling pads 200, 200' and the upper case 515.

The inverter 540 is disposed at the rear side of the lower case 510 and generates discharge voltage for driving the flat fluorescent lamp 100. The inverter 540 is connected via wires 541, 542 to electrode units of the flat fluorescent lamp 100 and discharge voltage generated from the inverter 540 is transmitted via the wires to the flat fluorescent lamp 100.

The optical sheet 530 may include a diffusion sheet (not shown) for diffusing the light emitted from the flat fluorescent lamp 100 and a prism sheet (not shown) for collimating the diffused light.

As described above, the flat fluorescent lamp according to the present invention prevents a dielectric breakdown in a glass plate caused by excessive heat from the electrode unit, resultantly ensuring high reliability. Furthermore, driving voltage to be applied to the lamp can be increased beyond its limitation, thereby realizing a high brightness flat fluorescent lamp.

The present invention has been described above with reference to the aforementioned embodiments. It is evident, however, that many alternative modifications and variations will be apparent to those skilled in the art in light of the foregoing description. Accordingly, the present invention embraces all such alternative modifications and variations as fall within the spirit and scope of the appended claims.

## Claims

1. A flat fluorescent lamp comprising:
a main body with a plurality of discharge spaces therein;
an electrode unit for applying voltage to the discharge spaces, said electrode unit formed on the surface of the main body; and
at least one cooling pad adhered onto the electrode unit.

2. The flat fluorescent lamp of claim 1, wherein the electrode unit is formed as a band shape and the cooling pad is elongated from an end to the other end of the electrode unit.

3. The flat fluorescent lamp of claim 1, wherein the electrode unit includes a plurality of electrodes formed independently and the cooling pad is formed to correspond to the electrodes respectively.

4. The flat fluorescent lamp of claim 1, wherein the cooling pad consists of at least two materials which have different thermal conductivity with each other.

5. The flat fluorescent lamp of claim 4, wherein the cooling pad includes at least two layers stacked vertically on the electrode unit.

6. The flat fluorescent lamp of claim 4, wherein the cooling pad includes at least two parts formed to be horizontally adjacent to each other.

7. The flat fluorescent lamp of claim 1, further comprising a supporting member being combined with the flat fluorescent lamp and preventing the cooling pad from being separated from the electrode unit.

8. The flat fluorescent lamp of claim 7, wherein the supporting member comprises an outer frame having a rectangular shape to correspond to the shape of the flat fluorescent lamp, and a pair of fixing parts being folded at two ends facing each other of the outer frame and being fitted into two side parts facing each other of the flat fluorescent lamp.

9. The flat fluorescent lamp of claim 1, wherein the cooling pad includes an upper part and at least one protrusion part formed on the lower surface of the upper part.

10. A backlight unit comprising:
a flat fluorescent lamp including a main body with a plurality of discharge spaces therein, an electrode unit for applying voltage to the discharge spaces, said electrode unit formed on the surface of the main body, and at least one cooling pad adhered onto the electrode unit;
an upper and an lower cases receiving the flat fluorescent lamp;
an optical sheet disposed between the upper case and the flat fluorescent lamp; and
an inverter for applying drive-voltage to the electrodes.

11. The backlight unit of claim 10, further comprising a supporting member being combined with the flat fluorescent lamp and preventing the cooling pad from being separated from the electrode unit.

12. The flat fluorescent lamp of claim 10, wherein the cooling pad includes an upper part and at least one protrusion part formed on the lower surface of the upper part.
